# EUROPEAN PATENT SPECIFICATION

(11) **EP 1 831 629 B1**
(45) Date of publication and mention of the grant of the patent: **18.06.2014**
(21) Application number: 05823466.7
(22) Date of filing: 09.12.2005
(51) Int. Cl.: F27B 1/00, F27B 1/20, C04B 2/10, F27D 3/00, B65G 53/46, C04B 2/12, C21B 7/20

(54) **SYSTEM FOR CYCLICALLY CHARGING LIMESTONE IN REGENERATING OVENS EQUIPPED WITH INTERNAL PRESSURE EQUALIZER AND CHARGING PROCESS USING SUCH SYSTEM**
SYSTEM ZUM ZYKLISCHEN BESCHICKEN VON KALKSTEIN IN MIT EINER INNEREN DRUCKAUSGLEICHSVORRICHTUNG AUSGESTATTETEN REGENERATIONSÖFEN UND SOLCH EIN SYSTEM VERWENDENDES BESCHICKUNGSVERFAHREN
SYSTEME PERMETTANT DE CHARGER CYCLIQUEMENT DU CALCAIRE DANS DES FOURS DE REGENERATION EQUIPES D'UN EGALISEUR DE PRESSION INTERNE ET SON PROCEDE DE CHARGEMENT

(30) Priority: 29.12.2004 IT TO20040919
(43) Date of publication of application: 12.09.2007
(73) Proprietor: Cimprogetti S.p.A., 24044 Dalmine (BG) (IT)
(72) Inventor: COLLARINI, Oliviero, 24044 Dalmine (BG) (IT); CRISTEA, Eugen Dan, c/o Cimprogetti S.P.A., 24044 Dalmine (BA) (IT)
(74) Representative: Garavelli, Paolo
(86) International application number: PCT/IT2005/000724
(87) International publication number: WO 2006/070424

(56) References cited:
- AT-B- 377 078
- DE-A1- 2 035 458
- DE-U- 1 917 347
- US-A- 4 708 643

## Description

The present invention refers to a system for cyclically charging limestone in regenerating ovens equipped with an internal pressure equalizing device; moreover, the present invention refers to a charging process using the above system. DE-A1-20 35 458 and US-A-4 708 643 disclose apparatuses for charging blast furnaces.

As known, parallel-flow regenerating ovens for producing lime from limestone are composed of two vats mutually interconnected through a connection channel as described in AT 377078 A.

Limestone is loaded in every vat and descends along the pre-heating area in which the regenerating heat exchange occurs in counter-current with fumes, passes the fuel inserting lances and arrives in the cooking/calcining area. From here, it reaches the lime cooling area.

The oven operation provides for the alternate combustion in every vat with a combustion cycle which is from 8 to 12 minutes long.

In the first step of the combustion cycle, fuel is entered through lances in the combustion vat and burns in the combustion air which is blown-in. The freed heat is partly absorbed by the limestone calcination in the first vat. Simultaneously, cooling air is entered from the base of every vat in order to cool the lime. Cooling air of the combustion vat, together with combustion gases and carbon dioxide formed from calcination, travel into the interconnected transverse channel, thereby reaching the second vat at the temperature of about 1050° C. In the second vat, gases coming from the first vat are mixed with cooling air at the base of the second vat and rise, thereby heating the limestone which can be found in the heating area of the second vat.

Should the above described operating mode go on, the temperature of exhaust gases would rise well above 300° C. Therefore, after a period of 8 - 12 minutes, the fuel and air flows to the first vat initially under combustion are stopped, vats are depressurised, lime is discharged, vats are recharged with fresh limestone and the process is reversed; in traditional ovens, it is important not to exceed the 12-minute combustion cycle, in order to avoid an overheating and the possible following lime burning. After having loaded the limestone, fuel and air are supplied in the second vat and exhaust gases are expelled from the top part of the first vat towards a sleeve filter for lowering solid particulates before scavenging in the atmosphere/environment.

Two key principles are the base of this way of operating:
- the pre-heating area of every vat operates as a regenerating heat exchanger, recovering from fumes the excess heat not completely absorbed by the mineral in the combustion vat. This heat, after the combustion vat reversal, pre-heats the combustion air up to a temperature of about 800° C during the pre-heating cycle. As a result, fumes coming from combustion and decarbonisation are heated from the outside at a temperature which can be highly lower than 100 °C;
- lime calcination is completed at transverse vat connecting channel level at a moderate temperature of about 1100° C. This favours the production of very reactive burnt lime, with a reduced contents of CaCO₃ (in-burnt).

However, using known regenerating ovens as described above, the amount of heat contained in exhaust gases in the oven pre-heating area is much greater than the amount which can be absorbed by limestone. Moreover, in known regenerating ovens as described above, the combustion cycle length is limited by the temperature increase of exhaust gases which leave the oven.

From what is stated above, it is further clear that the vat supply with fresh limestone can occur only during the reversal phase, in which the oven is depressurised, then taken back to ambient pressure, strongly constraining the combustion/preheating cycle length.

Therefore, object of the present invention is solving the above prior art problems by providing a system for cyclically charging limestone in regenerating ovens equipped with an internal pressure equalizing device which allows supplying vats with fresh limestone during the combustion cycle.

Another object of the present invention is providing a system for cyclically charging limestone in regenerating ovens which allows prolonging the combustion cycle up to about 20 minutes, at the same time avoiding the exhaust gas temperature increase by supplying fresh limestone during the combustion cycle.

A further object of the present invention is providing a system for cyclically charging limestone in regenerating ovens which allows recovering part of the combustion gas excess heat, decreasing and settling the exhaust gas temperature.

Another object of the present invention is providing a system for cyclically charging limestone in regenerating ovens which allows increasing the lime production by increasing the combustion period length between an oven reversal and the other.

A further object of the present invention is providing a system for cyclically charging limestone in regenerating ovens which allows prolonging the delivery of exhaust gases with high CO₂ contents during the combustion cycle, that is prolonged up to about 20 minutes.

Moreover, an object of the present invention is providing a process for charging limestone in regenerating ovens which uses the cyclic charging system according to the present invention.

The above and other objects and advantages of the invention, which will result from the following description, are reached with a system for cyclically charging limestone in regenerating ovens equipped with an internal pressure equalizing device as disclosed in claim 1. Moreover, the above and other objects and advantages of the invention are reached with a process for charging limestone in regenerating ovens as disclosed in claim 9. Preferred embodiments and non-trivial variations of the present invention are the subject matter of the dependent claims.

The present invention will be better described by some preferred embodiments thereof, provided as a non limiting example, with reference to the enclosed drawings, in which:
- FIG. 1 shows a schematic side view of an embodiment of the system for cyclically charging limestone in regenerating ovens equipped with an internal pressure equalizing device according to the present invention; and
- FIG. 2 shows a comparative graph of the combustion or pre-heating/reversal cycle of a regenerating oven using the system and/or the procedure according to the present invention with respect to the combustion or pre-heating/reversal cycle of a traditional regenerating oven.

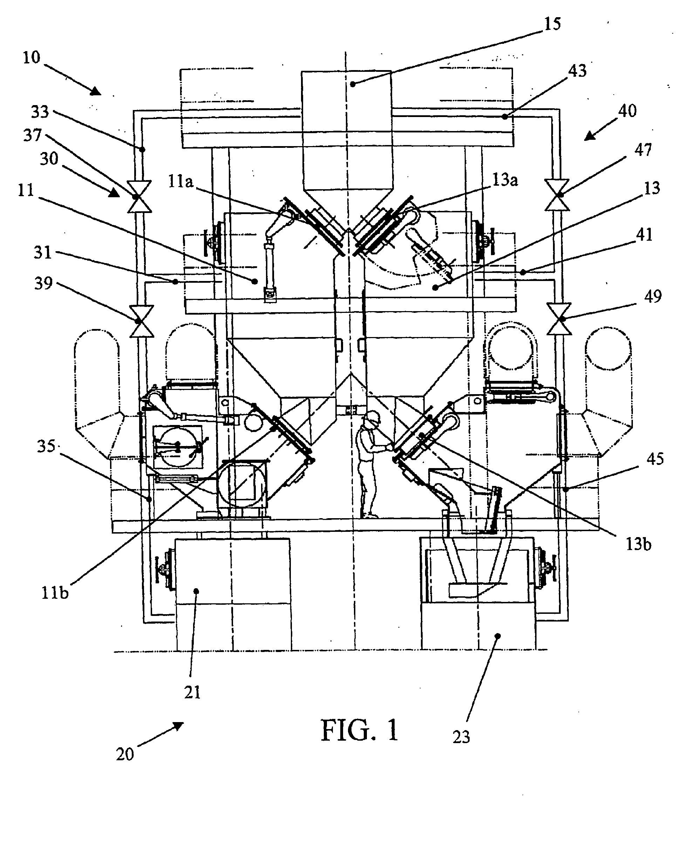

With reference to FIG. 1, it is possible to note the system 10 for cyclically charging limestone according to the present invention cooperating with a known regenerating oven 20, of which mouths of the first and second vat are shown, respectively designated by references 21 and0 23. The system 10 according to the present invention, adapted to alternatively charge, according to a cyclic operation, the two vats 21, 23 with fresh limestone, comprises means for storing and supplying limestone, adapted to receive such limestone supplied by charging means, to store and supply it in turn to vats 21, 23 alternatively and cyclically by interposing the supply valves mentioned below. In particular, in the preferred embodiment shown, such storing and supplying means comprises a first and a second intermediate tank for storing and supplying limestone, respectively designated with references 11 and 13, each one of which has an upper opening connected to the charging means, which can be a charging hopper 15, from which it receives a supply of limestone, and a lower opening connected with a respective vat 21, 23 to supply this latter one by gravity with the limestone contained therein. Both the upper and the lower opening are then equipped with respective upper and lower supply valves adapted to cyclically insulate the internal volume of intermediate tanks 11, 13 alternatively from the charging hopper 15 or the respective vat 21, 23.

Such supply valves are, in the preferred embodiment shown, upper airtightly sealed doors 11a, 13a placed in order to open or close the upper openings of intermediate tanks, respectively 11 and 13, and lower airtightly sealed doors 11b, 13b placed in order to open or close the lower openings of intermediate tanks, respectively 11 and 13, such doors 11a, 11b, 13a, 13b being preferably adapted to be opened in the gravity fall direction of lime from the charging hopper 15 towards the vats 21, 23. Alternatively, the supply valves could be any other type of functionally adequate airtightly sealed valve or device.

In order to allow supplying limestone to the oven 20 during the combustion step, therefore without the need of having to depressurise vats 21, 23, the system 10 according to the present invention is further equipped with an internal pressure equalizing device for the intermediate tanks 11,13. Such device is in fact adapted, as can be seen afterwards in greater detail, to cyclically equalize the internal pressure of storing and supplying means alternatively with the pressure at which the charging means operate, or with the internal pressure of the oven 20, thereby solving the problems deriving from the existence of not neglectable pressure differentials between the environment in which the charging means operate and the inside of the oven 20 with which the storing and supplying means must alternatively communicate. In particular, in the preferred embodiment shown, the internal pressure equalizing device operates by equalising the internal pressure of intermediate tanks 11, 13 cyclically with the charging hopper 15 pressure, typically at ambient pressure, to allow opening the upper airtightly sealed doors 11a, 11b, and with the internal oven pressure, to allow opening the lower airtightly sealed doors 13a, 13b during system 10 operation.

In the preferred embodiment of the present invention, the internal pressure equalizing device is composed of at least a first and a second equalization circuits, respectively 30, 40 preferably independent and advantageously mutually equal, and each one of which is adapted to control the internal pressure of one of the two intermediate tanks 11, 13. Each equalisation circuit 30, 40 is adapted to connect, by interposing a valve system described below, the respective intermediate tank 11, 13 alternatively with an environment having the same pressure at which the charging hopper 15 operates, and with the oven 20 interior or with an environment having its same internal pressure; in this way, cyclically, each intermediate tank 11, 13 during the system 10 operation, will have an internal pressure equal to the one at which the charging hopper 15 operates, typically the ambient pressure, or equal to the internal oven 20 pressure. For such purpose, each equalisation circuit 30, 40 is preferably composed of a piping 31, 41 exiting from the respective intermediate tank 11, 13 which is divided into a first piping 33, 43 which is connected to the environment, having the same pressure at which the charging hopper 15 operates, and a second piping 35, 45 which is connected to the oven 20 interior or to an environment having its same internal pressure; each first piping 33, 43 is equipped with a first equalisation valve 37, 47 anc each second piping 35, 45 is equipped with a second equalisation valve 39, 49. If supply valves are all closed, therefore when the first equalisation valve 37, 47 is open and the second equalisation valve 39, 49 is closed, the respective intermediate tank 11, 13 has an internal pressure equal to the one in the environment in which the charging hopper 15 operates; when instead the first equalisation valve 37, 47 is closed and the second equalisation valve 39, 49 is open, the respective intermediate tank 11, 13 has an internal pressure equal to the oven 20 pressure.

In order to better understand the cyclic operation of the system 10 according to the present invention, herein below a sequence of operating steps will be described, carried out by the system 10 itself, starting, as a non-limiting example, from the supply of fresh limestone to the first vat 21. Consequently, as an explanation, one starts from a status in which all supply valves and all equalisation valves are assumed as closed: the system 10 then operates as follows:
- the first equalisation valve 37 of the first equalisation circuit 30 is opened: in this way, the first intermediate tank 11 assumes the same internal pressure as of the environment in which the charging hopper 15 operates and it is possible to open the upper airtightly sealed door 11a without the problems deriving from pressure differentials;
- the upper airtightly sealed door 11a of the first intermediate tank 11 is opened and the fresh limestone, due to gravity, precipitates from the charging hopper 15 inside the first intermediate tank 11;
- the upper airtightly sealed door 11a of the first intermediate tank 11 and the first equalisation valve 37 of the first equalisation circuit 30 are closed;
- the second equalisation valve 39 of the first equalisation circuit 30 is opened: in this way the first intermediate tank 11 assumes the same internal pressure as of the oven 20 and it is therefore possible to open the lower airtightly sealed door 11b of the first intermediate tank 11 without the problems deriving from pressure differentials;
- the lower airtightly sealed door 11b of the first intermediate tank 11 is opened and the fresh limestone contained in the first intermediate tank 11, due to gravity, precipitates inside the first vat 21;
- the lower airtightly sealed door 11b of the first intermediate tank 11 and the second equalisation valve 39 of the first equalisation circuit 30 are closed;
- the first equalisation valve 47 of the second equalisation circuit 40 is opened: in this way the second intermediate tank 13 assumes the same internal pressure as of the environment in which the charging hopper 15 operates and it is possible to open the upper airtightly sealed door 13a of the second intermediate tank 13 without the problems deriving from pressure differentials;
- the upper airtightly sealed door 13a of the second intermediate tank 13 is opened and the fresh limestone, due to gravity, precipitates from the charging hopper 15 inside the second intermediate tank 13;
- the upper airtightly sealed door 13a of the second intermediate tank 13 and the first equalisation valve 47 of the second equalisation circuit 40 are closed;
- the second equalisation valve 49 of the second equalisation circuit 40 is opened: in this way the second intermediate tank 13 assumes the same internal pressure as of the oven 20 and it is therefore possible to open the lower airtightly sealed door 13b of the second intermediate tank 13 without the problems deriving from pressure differentials;
- the lower airtightly sealed door 13b of the second intermediate tank 13 is opened and the fresh limestone contained in the second intermediate tank 13, due to gravity, precipitates inside the second vat 23;
- the lower airtightly sealed door 13b of the second intermediate tank 13 and the second equalisation valve 49 of the second equalisation circuit 40 are closed;
- the sequence of previous steps is then repeated starting from the first step.

Obviously, opening and closing of supply valves and/or control of the internal pressure equalizing device can be operations managed and performed at suitable times by a human operator; alternatively, such operations can be controlled and managed by automatic controlling and managing means, such as for example PLC systems.

In an alternative embodiment, not shown, of the system 10 according to the present invention, the storing and supplying means can advantageously be a single intermediate tank connected on its lower side both to the first vat 21 and to the second vat 23; such single intermediate tank would then receive as supply the limestone from the charging means by interposing an upper supply valve and alternatively and cyclically it would supply with the same limestone the first vat 21 or the second vat 23 by interposing related first and second lower supply valves. In this case, the pressure equalizing device could also be composed of a single equalisation circuit which cyclically equalizes the internal pressure of the intermediate tank with the environment in which charging means operate or with the internal oven 20 pressure.

In compliance with what has been described above, subject matter of the present invention is also a process for charging limestone in regenerating ovens which uses the cyclically charging system 10 according to the present invention. The process according to the present invention, starting like before from a status in which, as an example, all supply valves and all equalisation valves are assumed as closed, then comprises the steps of:
- equalising the internal pressure of the storing and supplying means with the pressure of the environment in which the charging means operate;
- supplying the storing and supplying means with limestone from the charging means;
- equalising the internal pressure of the storing and supplying means with the internal pressure of the oven 20;
- supplying the first vat 21 with said limestone from the charging means;
- equalising the internal pressure of the storing and supplying means with the pressure of the environment in which the charging means operate;
- supplying the storing and supplying means with limestone from the charging means;
- equalising the internal pressure of the storing and supplying means with the internal pressure of the oven (20);
- supplying the second vat (23) with the limestone;
- cyclically repeating the previous steps.

With reference now to the preferred and shown embodiment of the system 10, the process according to the present invention comprises in particular the steps of:
- equalising the internal pressure of the first intermediate tank 11 with the pressure of the environment in which the charging hopper 15 operates; in particular such step preferably comprises the step of opening the first equalisation valve 37 of the first equalisation circuit 30;
- opening the upper supply valve of the first intermediate tank 11 and precipitating the fresh limestone, due to gravity, from the charging hopper 15 inside the first intermediate tank 11; in particular such step preferably comprises the step of opening the upper airtightly sealed door 11a of the first intermediate tank 11;

- closing the upper supply valve of the first intermediate tank 11; in particular such step preferably comprises the step of closing the upper airtightly sealed door 11a of the first intermediate tank 11 and the first equalisation valve 37 of the first equalisation circuit 30;
- equalising the internal pressure of the first intermediate tank 11 with the internal pressure of the oven 20; in particular such step preferably comprises the step of opening the second equalisation valve 39 of the first equalisation circuit 30;
- opening the lower supply valve of the first intermediate tank 11 and precipitating the fresh limestone, due to gravity, inside the first intermediate tank 11 inside the first vat 21; in particular such step preferably comprises the step of opening the lower airtightly sealed door 11b of the first intermediate tank 11;
- closing the lower supply valve of the first intermediate tank 11; in particular such step preferably comprises the step of closing the lower airtightly sealed door 11b of the first intermediate tank 11 and the second equalisation valve 39 of the first equalisation circuit 30;
- equalising the internal pressure of the second intermediate tank 13 with the pressure of the environment in which the charging hopper 15 operates; in particular such step preferably comprises the step of opening the first equalisation valve 47 of the second equalisation circuit 40;
- opening the upper supply valve of the second intermediate tank 13 and precipitating the fresh limestone, due to gravity, from the charging hopper 15 inside the second intermediate tank 13; in particular such step preferably comprises the step of opening the upper airtightly sealed door 13a of the second intermediate tank 13;
- closing the upper supply valve of the second intermediate tank 13; in particular such step preferably comprises the step of closing the upper airtightly sealed door 13a of the second intermediate tank 13 and the first equalisation valve 47 of the second equalisation circuit 40;
- equalising the internal pressure of the second intermediate tank 13 with the internal pressure of the oven 20; in particular such step preferably comprises the step of opening the second equalisation valve 49 of the second equalisation circuit 40;
- opening the lower supply valve of the second intermediate tank 13 and precipitating the fresh limestone, due to gravity, inside the second intermediate tank 13 inside the second vat 23; in particular such step preferably comprises the step of opening the lower airtightly sealed door 13b of the second intermediate tank 13;
- closing the lower supply valve of the second intermediate tank 13; in particular such step preferably comprises the step of closing the lower airtightly sealed door 13b of the second intermediate tank 13 and the second equalisation valve 49 of the second equalisation circuit 40;
- cyclically repeating the previous sequence starting from the first step.

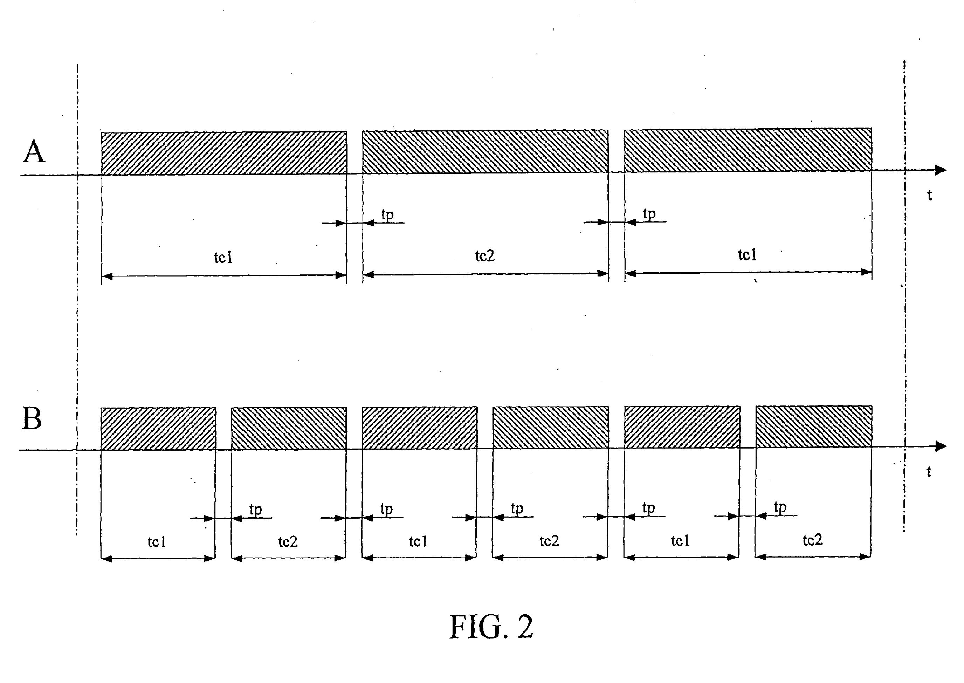

With reference now to FIG. 2, it is possible to note two diagrams which compare the time length of the reversal or preeating/reversal cycle of a traditional regenerating oven (diagram A) with respect to the ones of a regenerating oven equipped with the system 10 according to the present invention and/or charged according to the above described process (diagram B): from such comparison, the advantages deriving from the present invention are clear. In particular, tc1 and tc2 designate the combustion cycle length respectively in the first and in the second vat 21, 23, and tp designates the length of the pre-heating/reversal cycle; from the comparison of the two diagrams, it is clear that the use of the system and/or process according to the present invention allows prolonging the combustion cycle up to about twice the cycle length in a traditional oven due to the fact that, by supplying fresh limestone during the combustion cycle, an excessive increase of exhaust gas temperature is avoided. It is therefore clear that the use of the system and/or the process according to the present invention allows highly increasing lime production with respect to a traditional oven due to the increase in the combustion period length between a vat reversal and another.

Moreover, another advantage from the use of the system and/or the process according to the present invention is that they allow supplying limestone to vats avoiding that powders and vapours go out of the vats themselves, since insulated from the enviroment during the supply step by interposing the storing and supplying means.

## Claims

1. Regenerating oven (20) comprising a first and second vat (21; 23) and including a system (10) for cyclically charging limestone in said first and second vat (21; 23), said system (10) comprising:
- storing and supplying means adapted to receive said limestone as supplied from charging means, to store and supply it alternately and cyclically to a first and a second vat (21; 23) of said oven (20) by interposing airtightly sealed supply valves, said storing and supplying means comprising:
* at least one first intermediate storing and supplying tank (11) having an upper connecting opening with said charging means of said limestone by interposing an upper supply valve and a lower connecting opening with said first vat (21) of said oven (20) by interposing a lower supply valve;
* at least one second intermediate storing and supplying tank (13) having an upper connecting opening with said charging means of said limestone by interposing an upper supply valve and a lower connecting opening with a second vat (23) of said oven (20) by interposing a lower supply valve;
**characterised in that** said system (10) further comprises:
- an internal pressure equalizing device of said storing means with a pressure of an environment in which said charging means operate or an internal pressure of said oven (20), said internal pressure equalizing device comprising at least a first equalisation circuit (30) of said first intermediate tank (11) and a second equalisation circuit (40) of said second intermediate tank (13), wherein
* said first equalisation circuit (30) comprises a piping (31) going out of said first intermediate tank (11) being divided into a first piping (33) which is connected to said environment in order to be subjected to the same pressure at which said charging means operate by interposing a first equalisation valve (37), and into a second piping (35) which is connected to an interior of said oven (20) or to an environment with a pressure that is equal to the pressure of the interior of said oven (20) by interposing a second equalisation valve (39); and
* said second equalisation circuit (40) comprises a piping (41) going out of said second intermediate tank (13) being divided into a first piping (43) which is connected to said environment in order to be subjected to the same pressure at which said charging means operate by interposing a first equalisation valve (47), and into a second piping (45) which is connected to an interior of said oven (20) or to an environment with a pressure that is equal to the pressure of the interior of said oven (20) by interposing a second equalisation valve (49).

2. Regenerating oven (20) according to claim 1, **characterised in that** said charging means are a charging hopper (15).

3. Regenerating oven (20) according to claim 1, **characterised in that** said storing and supplying means comprise an intermediate storing and supplying tank having an upper connecting opening with said charging means of said limestone by interposing an upper supply valve and lower connecting openings with said first vat (21) and said second vat (23) of said oven (20) by interposing lower supply valves.

4. Regenerating oven (20) according to claim 1, **characterised in that** said supply valves are upper airtightly sealed doors (11a; 13a) and lower airtightly sealed doors (11b; 13b).

5. Regenerating oven (20) according to claim 1, **characterised in that** said supply valves are airtightely sealed doors.

6. Regenerating oven (20) according to claim 1, **characterised in that** it comprises automatic controlling and managing means adapted to drive said supply valves (11a, 11b; 13a, 13b) and said pressure equalizing device.

7. Regenerating oven (20) according to claim 1, **characterised in that** said automatic controlling and managing means are PLC systems.

8. Process for charging limestone in a regenerating oven (20) through the system (10) according to any one of the previous claims, **characterised in that** it comprises the steps of:
- equalising said internal pressure of said first intermediate tank (11) with said pressure of said environment in which said charging means operate;
- opening said upper supply valve of said first intermediate tank (11) and precipitating said limestone due to gravity from said charging means inside said first intermediate tank (11);
- closing said upper supply valve of said first intermediate tank (11);
- equalising said internal pressure of said first intermediate tank (11) with said internal pressure of said oven (20);
- opening said lower supply valve of said first intermediate tank (11) and precipitating said limestone due to gravity from inside said first intermediate tank (11) to inside said first vat (21);
- closing said lower supply valve of said first intermediate tank (11);
- equalising said internal pressure of said second intermediate tank (13) with said pressure of said environment in which said charging means operate;
- opening said upper supply valve of said second intermediate tank (13) and precipitating said limestone due to gravity from said charging means (15) inside said second intermediate tank (13);
- closing said upper supply valve of said second intermediate tank (13);
- equalising said internal pressure of said second intermediate tank (13) with said internal pressure of said oven (20) ;
- opening said lower supply valve of said second intermediate tank (13) and precipitating said limestone due to gravity from inside said second intermediate tank (13) to inside said second vat (23);
- closing said lower supply valve of said second intermediate tank (13);
- cyclically repeating the previous steps.

9. Process according to claim 8, **characterised in that** said step of equalising said internal pressure of said first intermediate tank (11) with said pressure of said environment in which said charging means operate comprises the step of opening said first equalisation valve (37) of said first equalisation circuit (30).

10. Process according to claim 8, **characterised in that** said step of opening said upper supply valve of said first intermediate tank (11) comprises the step of opening said upper airtightly sealed door (11a) of said first intermediate tank (11).

11. Process according to claim 8, **characterised in that** said step of closing said upper supply valve of said first intermediate tank (11) comprises the step of closing said upper airtightly sealed door (11a) of said first intermediate tank (11) and said first equalisation valve (37) of said first equalisation circuit (30).

12. Process according to claim 8, **characterised in that** said step of equalising said internal pressure of said first intermediate tank (11) with said internal pressure of said oven (20) comprises the step of opening said second equalisation valve (39) of said first equalisation circuit (30).

13. Process according to claim 8, **characterised in that** said step of opening said lower supply valve of said first intermediate tank (11) comprises the step of opening said lower airtightly sealed door (11b) of said first intermediate tank (11).

14. Process according to claim 8, **characterised in that** said step of closing said lower supply valve of said first intermediate tank (11) comprises the step of closing said lower airtightly sealed door (11b) of said first intermediate tank (11) and said second equalisation valve (39) of said first equalisation circuit (30).

15. Process according to claim 8, **characterised in that** said step of equalising said internal pressure of said second intermediate tank (13) with said pressure of said environment in which said charging means operate comprises the step of opening said first equalisation valve (47) of said second equalisation circuit (40).

16. Process according to claim 8, **characterised in that** said step of opening said upper supply valve of said second intermediate tank (13) comprises the step of opening said upper airtightly sealed door (13a) of said second intermediate tank (13).

17. Process according to claim 8, **characterised in that** said step of closing said upper supply valve of said second intermediate tank (13) comprises the step of closing said upper airtightly sealed door (13a) of said second intermediate tank (13) and said first equalisation valve (47) of said second equalisation circuit (40).

18. Process according to claim 8, **characterised in that** said step of equalising said internal pressure of said second intermediate tank (13) with said internal pressure of said oven (20) comprises the step of opening said second equalisation valve (49) of said second equalisation circuit (40).

19. Process according to claim 8, **characterised in that** said step of opening said lower supply valve of said second intermediate tank (13) comprises the step of opening said lower airtightly sealed door (13b) of said second intermediate tank (13).

20. Process according to claim 8, **characterised in that** said step of closing said lower supply valve of said second intermediate tank (13) comprises the step of closing said lower airtightly sealed door (13b) of said second intermediate tank (13) and said second equalisation valve (49) of said second equalisation circuit (40).

## Patentansprüche

1. Regenerativer Ofen (20) mit einem ersten und einem zweiten Schacht (21;23) und mit einem zyklischen Kalkladesystem (10) im genannten ersten und zweiten Schacht (21;23), das genannte System(10) schließt folgendes ein:
- Lagerungs- und Zufühvorrichtungen, die dazu dienen, den genannten Kalk durch die Zufübrung der Ladevorrichtungen zu erhalten, diesen zu lagern und abwechselnd und zyklisch einem ersten und zweiten Schacht (21;23) des genannten Ofens (20) durch die Zwischenposidonierung von hermetischen Zulaufventilen zuzuführen, die genannten Lagerungs- und Zuführvorrichtungen schließenfolgendes ein:
* mindestens einen ersten Zwischenbehälter (11) für die Lagerung und Zuführung mit einer oberen Verbindungsöffnung mit den genannten Ladevorrichtungen des genannten Kalks durch Zwischenpositionierung eines oberen Zulaufventils und einer unteren Verbindungsöffnung mit dem genannten ersten Schacht (21) des genannten Ofens (20) durch Zwischenpositionierung eines unteren Zulaufventils;
* mindestens einen zweiten Zwischenbehälter (13) für die Lagerung und Zuführung mit einer oberen Verbindungsöffnung mit den genannten Ladevorrichtungen des genannten Kalks durch Zwischenpositionierung eines oberen Zulaufventils und einer unteren Verbindungsöffnung mit dem genannten zweiten Schacht (23) des genannten Ofuns (20) durch Zwischenpositionierung eines unteren Zulaufventils;
und ist **dadurch gekennzeichnet, dass** das genannte System (10) folgendes einschließt:
- eine interne Druckausgleichvorrichtung der genannten Lagerungsvorrichtungen mit dem Druck einer Umgebung in der die genannten Ladevorrichtungen arbeiten, oder mit dem internen Druck des genannten Ofens (20), die genannte interne Druckausgleichvorrichtung enthält mindestens einen ersten Ausgleichkreis (30) des genannten ersten Zwischenbehälter, (11) und einen zweiten. Ausgleichkreis (40) des genannten zweiten Zwischenbehälters (13), in dem
* der genannte erste Ausgleichkreis (30) eine Leitung (31) einschließt, die aus dem genannten ersten Zwischenbehälter (11) austritt und sich in eine ersten Leitung (33) aufteilt, die sich mit der genannten Umgebung verbindet, um dem gleichen Druck ausgesetzt zu werden, mit dem die genannten Ladevorrichtungen durch Zwischenpositionierung eines ersten Ausgleichventils (37) arbeiten, und in einen zweiten Kanal (35), der sich mit dem Inneren des genannten Ofens (20) oder mit einer Umgebung verbindet, die dem Druck an Inneren des genannten Ofens (20) durch Zwischenpositionierung eines zweiten Ausgleichventils (39) entspricht; und
* der genannte zweite Ausgleichkreis (40) eine Leitung (41) einschließt, die aus dem genannten zweiten Zwischenbehälter (13) austritt und sich in eine erste Leitung (43) aufteilt, die sich mit der genannten Umgebung Verbindet, um dem gleichen Druck ausgesetzt zu werden, mit dem die genannten Ladevorrichtungen durch Zwischenpositionierung eines ersten Ausgleichventils (47) arbeiten, und in eine zweite Leitung (45), die sich mit dem Inneren des genannten Ofens (20) oder mit einer Umgebung verbindet, die dem Druck im Inneren des genannten Ofens (20) durch Zwischenpositionierung eines zweiten Ausgleichventils (49) entspricht.

2. Regenerativer Ofen (20) gemäß Patentanspruch 1, der **dadurch gekennzeichnet ist, dass** die genannten Ladevorrichtungen ein Ladetrichter (15) sind.

3. Regenerativer Ofen (20) gemäß Patentanspruch 1, der **dadurch gekennzeichnet ist, dass** die genannten Lagerungs- und Zuführvorrichtungen einen Zwischenbehälter für die Lagerung und Zuführung mit einer oberen Verbindungsöffnung mit den genannten Ladevorrichtungen des genannten Kalks durch Zwischenpositionierung eines oberen Zulaufventils und unteren Verbindungsöffnungen mit dem genannten ersten Schacht (21) und dem genannten zweiten Schacht (23) des genannten Ofens (20) durch Zwischenpositionierung der unteren Zulaufventile enthalten.

4. Regenerativer Ofen (20) gemäß Patentanspruch 1, der **dadurch gekennzeichnet ist, dass** die genannten Zulaufventile obere hermetische Türen (11a; 13a) und untere hermetische Türen (11b; 13b) sind.

5. Regenerativer Ofen (20) gemäß Patentanspruch 1, der **dadurch gekennzeichnet ist, dass** die genannten Zulaufventile hermetische Türen sind.

6. Regenerativer Ofen (20) gemäß Patentanspruch 1, der **dadurch gekennzeichnet ist, dass** er automatische Kontroll- und Steuervorrichtungen einschließt, die dazu dienen, die genannten Zulaufventile (11a, 11b; 13a, 13b) und die genannte Druckausgleichvorrichtung zu steuern.

7. Regenerativer Ofen (20) gemäß Patentanspruch 1, der **dadurch gekennzeichnet ist, dass** die genannten automatischen Kontroll- und Steuervorrichtungen PLC-Systeme sind.

8. Kalkladeverfahren in einen regenerativen Ofen (20) durch ein System (10) gemäß einem beliebigen der vorhergehenden Patentansprüche, das **dadurch gekennzeichnet ist, dass** es folgende Phasen enthält:
- Den genannten internen Druck des genarmten ersten Zwischenbehälters (11) mit dem genannten Druck der genannten Umgebung, in der die Ladevorrichtungen arbeiten, ausgleichen;
- Das genannte obere Zulaufventil des ersten Zwischenbehälter (11) öffnen, und den genannten Kalk durch die Schwerkraft von den genannten Ladevorrichtungen in den genannten ersten Zwischenbehälter (11) fallen lassen;
- Das genannte obere Zulaufventil des genannten ersten Zwischenbehälters (11) schließen;
- Den genannten internen Druck des genannten ersten Zwischenbehälters (11) mit dem genannten internen Druck des genannten Ofens (20) ausgleichen;
- Das genannte untere Zulaufventil des genannten ersten Zwischenbehälters (11) öffnen, und den genannten Kalk durch die Schwerkraft vom genannten ersten Zwischenbehälter (11) in den genannten ersten Schacht (21) fallen lassen;
- Das genannte untere Zulaufventil des genannten ersten Zwischenbehälters (11) schheßen;
- Den genannten internen Druck des genannten zweiten Zwischenbehälters (13) mit dem genannten Druck der genannten Umgebung, in der die Ladevorrichtungen arbeiten, ausgleichen;
- Das genannte obere Zulaufventil des zweiten Zwischenbehälters (13) öffnen, und den genannten Kalk durch die Schwerkraft von den genannten Ladevorrichtungen (15) in den genannten zweiten Zwischenbehälter (13) fallen lassen;
- Das genannte obere Zulaufventil des genannten zweiten Zwischenbehälters (13) schließen;
- Den genannten internen Druck des genannten zweiten Zwischenbehälters (13) mit dem genannten internen Druck des genannten Ofens (20) ausgleichen;
- Das genannte untere Zulaufventil des genannten zweiten Zwischenbehälters (13) öffnen, und den genannten Kalk durch die Schwerkraft vom genannten zweiten Zwischenbehälter (13) in den genannten zweiten Schacht (23) fallen lassen;
- Das genannte untere Zulaufventil des genannten zweiten Zwischenbehälters (13) schließen;
- Die vorhergehenden Phasen zyklisch wiederholen.

9. Verfahren gemäß Patentanspruch 8, das **dadurch gekennzeichnet ist, dass** die genannte Ausgleichphase des genannten internen Drucks des genannten ersten Zwischenbehälters (11) mit dem genannten Druck der genannten Umgebung, in der die genannten Ladevorrichtungen arbeiten, die Öffnungsphase des genannten ersten Ausgleichventils (37) des genannten ersten Ausgleichkreises (30) einschließt.

10. Verfahren gemäß Patentanspruch 8, das **dadurch gekennzeichnet** ist, das die genannte Öffnungsphase des genannten oberen Zulaufventils des genannten ersten Zwischenbehälters (11) die Öffnungsphase der genannten oberen hermetischen Tür (11a) des genannten ersten Zwischenbehälters (11) einschließt.

11. Verfahren gemäß Patentanspruch 8, das **dadurch gekennzeichnet ist, dass** die genannte Schließphase des genannten oberen Zulaufventils des genannten ersten Zwischenbehälters (11) die Schließphase der genannten oberen hermetischen Tür (11a) des genannten ersten Zwischenbehälters (11)- und des genannten ersten Ausgleichventils (37) des genannten ersten Ausgleichkreises (30) einschließt.

12. Verfahren gemäß Patentanspruch 8, das **dadurch gekennzeichnet ist, dass** die genannte Ausgleichphase des genanntem internen Drucks des genannten ersten Zwischenbehälters (11) mit dem genannten internen Druck des genannten Ofens (20) die Öffnungsphase des genannten zweiten Ausgleichventils (39) des genannten ersten Ausgleichkreises (30) einschließt.

13. Verfahren gemäß Patentanspruch 8, das **dadurch gekennzeichnet ist, dass** die genannte Öffnungsphase des genannten unteren Zulaufventils des genannten ersten Zwischenbehälters (11) die Öffnungsphase der genannten unteren hermetischen Tür (11b) des genannten ersten Zwischenbehälters (11) einshließt.

14. Verfahren gemäß Patentanspruch 8, das **dadurch gekennzeichnet ist, dass** die genannte Schließphase des genannten unteren Zulaufventils des genannten ersten Zwischenbehälters (11) die Schließphase der genannten unteren hermetischen Tür (11b) des genannten ersten Zwischenbehälters (11) und des genannten zweiten Ausgleichventils (39) des genannten ersten Ausgleichkreises (30) einschließt.

15. Verfahren gemäß Patentanspruch 8, das **dadurch gekennzeichnet ist, dass** die genannte Ausgleichphase des genannten internen Drucks des genannten zweiten Zwischenbehälters (13) mit dem genannten Druck der genannten Umgebung, in der die genannten Ladevorrichtungen arbeiten, die Öffnungsphase des genannten ersten Ausgleichventils (47) des genannten zweiten Ausgleichkreises (40) einschließt.

16. Verfahren gemäß Patentanspruch 8, das **dadurch gekennzeichnet ist, dass** die genannte Öffnungsphase des genannten oberen Zulautventils, des genannten zweiten Zwischenbehälters (13) die Öffnungsphase der genannten oberen hermetischen Tür (13a) des genannten zweiten Zwischenbehälters (13) einschließt.

17. Verfahren gemäß Patentanspruch 8, das **dadurch gekennzeichnet ist, dass** die genannte Schließphase des genannten oberen Zulaufventils des genannten zweiten Zwischenbehälters (13) die Schließphase der genannten oberen hermetischen Tür (13a) des genannten zweiten Zwischenbehälter (13) und des genannten ersten Ausgleichventils (47) des genannten zweiten Ausgleichkrzeises (40) einschließt.

18. Verfahren gemäß Patentanspruch 8, das **dadurch gekennzeichnet ist, dass** die genannte Ausgleichphase des genannten intemen Drucks des genannten zweiten Zwischenbehälters (13) mit dem genannten internen Druck des genannten Ofens (20) die Öffnungsphase des genannten zweiten Ausgleichventils (49) des genannten zweiten Ausgleichkreises (40) einschließt

19. Verfahren gemäß Patentanspruch 8, das **dadurch gekennzeichnet ist, dass** die genannte Öffnungsphase des genannten unteren Zulaufventils des genannten zweiten Zwischenbehälters (13) die Öffnungsphase der genannten unteren hermetischen Tür (13b) des genannten zweiten Zwischenbehälter (13) einschließt.

20. Verfahren gemäß Patentanspruch 8, das **dadurch gekennzeichnet ist, dass** die genannte Schließphase des genannten unteren Zulaufventils des genannten zweiten Zwischenbehälter (13) die Schließphase der genannten unteren hermetischen Tür (13b) des genannten zweiten Zwischenbehälters (13) und des genannten zweiten Ausgleichventils (49) des genannten zweiten Ausgleichkreises (40) einschließt.

## Revendications

1. Four régénérateur (20) oomprenant une première et une seconde cuve (21; 23) et contenant un système (10) de chargement cyclique de calcaire dans lesdites première et seconde cuve (21; 23), ledit système (10) comprenant
- des moyens de stockage et alimentation aptes à recevoir ledit calcaire en alimentation par des moyens de chargement, le stocker et l'alimenter en mode alternatif et cyclique à une première et seconde cuve (21; 23) dudit four (20) au moyen de l'inlerposidon de valves d'aâtnentêm à tenue hermétique, lesdits moyens de stockage et alimentation comprenant:
* au moins un premier réservoir intermédiaire (11) de stockage et alimentation ayant une ouverture supérieure de ïacaxdement avec- lesdits moyens de changement dudit calcaire- au-moyen d'intetposition d'une valve d'alimentation supérieure et une ouverture inférieure de raccordement avec ladite première cuve (2I) dudit four (20) au moyen d'interposition d'une valve d'alimentation inférieure;
* au moins un second reservoir intermédiaire (13) de stockage et alimentation ayant une ouverture supérieure de raccordement avec lesdits moyens de chargement dudit calcaire au moyen d'interposition, d'une valve d'alimentation supérieure, et une ouverture- inférieure, de raccordement avec une seconde cuve (23) dudit four (20) au moyen d'interposition d'une valve d'alimentation inférieure;
**caractérisé par le fait que** ledit système (10) conpend en outre:
- un dispositif égalisateur de pression interne ànùoe moyens de stodcage avec une pression d'un environnement dans lequel opèrent lesdits moyens de chargement ou une pression interne chzdit four (20), ledit dispositif égalisateur de pression interne en oomprenant au moins un premier circuit d"égaliSation (30) dudit premier réservoir intennediaire (11) et un second circuit d'égalisation (40) dudit second ïéservoir intermédiaire (13), dans lequel
* ledit premier circuit d' égalisation (30) conipmd un tube (31) sortant dudit premier réservoir intermédiaire (11) en se divisant en un premier tube.(33) qui se-raccorde avec ledit environnement dans le but d'être soumis à la même pression à laquelle opèrent lesdits moyens de chargement au moyen de l'inteiposidon d'une première valve d' égalisation.(37), et en une seconde canalisation (35) qui se raccorde avec l'intérieur dudit four (20) ou avec un environnement avec une pression qui est égale à la pression de l'intérieur dudit four (20) au moyen de l'intemosition d'une seconde valve d'égalisation (39); et
* ledit second circuit d'égalisation (40) comprend un tube (41) S<I1ant dudit second réservoir intennediaire (13) en se divisant en un premier tube (43) qui se raccorde avec ledit environnement dans le but d'être soumis à la même pression à laquelle opèrent lesdits moyens de chargement au moyen de l'interposition d'une première valve d'égalisation (4'7), et dans un second tube (45) qui se raccorde avec l'intérieur dudit four (20) ou avec un m- avec une pression qui est égale à la pression de l'intérieur dudit four (20) au moyen de rintemosition d'une seconde valve d'égalisation (49)

2. Four régénérateur (20) selon la revendication 1, **caractérisé par le fait que** lesdits moyens de chargement sont une trémie de chargement (15).

3. Four régénérateur (20) selon la revendication 1, **caractérisé par le fait que** lesdits moyens de stockage et alimentation comprement un réservoir intennédiaire de stockage et alimentation ayant une ouverture supérierne de raccordement avec lesdits moyens de chargement ledit calcaire au moyen d'interposition d'une valve d'alimentatioti supérieure et 4oe ouvertures inférieures de raccordement avec de ladite première cuve (21) et de ladite seconde cuve (23) dudit four (20) au moyen d'interposition de valves d'alimentation intérieures.

4. Four régénérateur (20) selon la revendication 1, **caractérisé par le fait que** lesdites valves d'alimentation sont des volets à tenue hennétique supérieurs (11a; 13a) et des volets à tenue hemiffique inférieures (1 lb;13b).

5. Four régénérateur (20) selon la revendication 1, **caractérisé par le fait que** lesdites valves æaIimentation sont des volets à tenue hermétique.

6. Four régénérateur (20) selon la revendication 1, **caractérisé par** le fait de comprendre des moyens de contrôle et gestion automatiques aptes à commander lesdites valves d'alimentation (11a, 11b; 13a, 13b) et ledit dispositif égalisâtes de pression.

7. Four régénérateur (20) selon la revendication 1, **caractérisé par le fait que** lesdits moyens de contrôle et gestion automatiques sont des systèmes PLC.

8. Procédure.de chargement de calcaire en four régénérateur (20) au moyen du système (10) selon une quelconque des revendications précédentes, **caractérisé par** le fait de comprendre les phases de :
- égaliser ladite pression interne dudit premier réservoir intermédiaire (11) avec ladite pression dudit environnement dans lequel opèrent lesdits moyens de chargement;
- ouvrir ladite valve d'alimentation supérieure dudit puiùer réservoir intermédiaire (11) et faire précipiter ledit calcaire par gravité par lesdits moyens de chargement à l'intérieur dudit premier réservoir intermédiaire (11);
- fermer ladite valve d'ahmemhon supérieure dudit premier réservoir intermédiaire (11);
- égaliser ladite pression intemedudit premier réservoir intermédiaire (11) avec ladite pression interne dudit four (20);
- ouvrir ladite valve d'alimentation inférieure dudit premier réservoir intermédiaire (U) et-faire précipiter ledit calcaire par gravité de l'intérieur dudit premier réservoir intermédiaire (11) à l'intérieur de ladite première cuve (21);
- fermer ladite valve d'àànentaüon inférieure dudit premier réservoir intermédiaire (11);
- égaliser ladite pression interne dudit second réservoir inëamédiaire (13) avec ladite pression dudit envirom1ement dans lequel opèrent lesdits moyens de chargement;
- ouvrir ladite valve d'alimentation supérieure dudit second réservoir intermédiaire (13) et faire précipiter ledit calcaire par gravité par lesdits moyens de chargement (15) à l'intérieur dudit second réservoir intermédiaire (13);
- fermer ladite valve d'alimentation supérieure dudit second réservoir intermédiaire (13);
- égaliser ladite pression interne dudit second réservoir intermédiaire (13) avec ladite pression interne dudit four (20);
- ouvrir ladite valve d'alimentation inférieure dudit second réservoir intermédiaire (13) et faire précipiter ledit calcaire par gravité de l'intérieur dudit second réservoir intermédiaire (13) à l'intérieur de ladite seconde cuve (23);
- fermer ladite valve d'alimentation inférieur dudit second réservoir intermédiaire (13);
- répéter cycliquement les phases précédentes.

9. Procédure selon la revendication 8, **caractérisé par le fait que** ladite phase d'égaliser ladite pression interne dudit premier réservoir intermédiaire (11) avec ladite pression dudit environnement dans lequel opèrent lesdits moyens de chargement comprend la phase d'ouvrir ladite première valve d'égalisation (37) dudit premier circuit d'égalisation (30).

10. Procédure selon la revendication 8, **caractérisé par le fait que** ladite phase d'ouvrir ladite valve d'alimentation supérieure dudit premier réservoir intermédiaire (11) comprend la phase d'ouvrir ledit volet à tenue hermétique supérieure (11a) dudit premier réservoir intermédiaire (11).

11. Procédure selon la revendication 8, **caractérisé par le fait que** ladite phase de fermer ladite valve d'alimentation supérieure dudit premier réservoir intermédiaire (11) comprend la phase de fermer ledit volet à tenue hermétique supérieure (11a) dudit premier réservoir intermédiaire (11) et de ladite première valve d'égalisation (37) dudit premier circuit d'égalisation (30).

12. Procédure selon la revendication 8, **caractérisé par le fait que** ladite phase d'égaliser ladite pression interne dudit premier réservoir intermédiaire (11) avec ladite pression interne dudit four (20) comprend la phase d'ouvrir ladite seconde valve d'égalisation (39) dudit premier circuit d'égalisation (30).

13. Procédure selon la revendication 8, **caractérisé par le fait que** ladite phase d'ouvrir ladite valve d'alimentation inférieure dudit premier réservoir intermédiaire (11) comprend la phase d'ouvrir ledit volet à tenue hermétique inférieure (11b) dudit premier réservoir intermédiaire (11).

14. Procédure selon la revendication 8, **caractérisé par le fait que** ladite phase de fermer ladite valve d'alimentation inférieure dudit premier réservoir intermédiaire (11) comprend la phase de fermer ledit volet à tenue hermétique inférieure (11b) ledit premier réservoir intermédiaire (11) et ladite seconde valve d'égalisation (39) dudit premier circuit d'égalisation (30).

15. Procédure selon la revendication 8, **caractérisé par le fait que** ladite phase d'égaliser ladite pression interne dudit second réservoir intermédiaire (13) avec ladite pression ledit environnement dans lequel opèrent lesdits moyens de chargement comprend la phase d'ouvrir ladite première valve d'égalisation (47) dudit second circuit d'égalisation (40).

16. Procédure selon la revendication 8, **caractérisé par le fait que** ladite phase d'ouvrir ladite valve d'alimentation supérieure dudit second réservoir intermédiaire (13) comprend la phase d'ouvrir ledit volet à tenue hermétique supérieure (13a) dudit second réservoir intermédiaire (13).

17. Procédure selon la revendication 8, **caractérisé par le fait que** ladite phase de fermer ladite valve d' alimentation supérieure dudit second réservoir intermédiaire (13) comprend la phase de fermer ledit volet à tenue hermétique supérieure (13a) dudit second réservoir intermédiaire (13) et de ladite première valve d'égalisation (47) dudit second circuit d'égalisation (40).

18. Procédure selon la revendication 8, **caractérisé par le fait que** ladite phase d'égaliser ladite pression interne dudit second réservoir intermédiaire (13) avec ladite pression interne dudit four (20) comprend la phase d'ouvrir ladite seconde valve d'égalisadon (49) dudit second circuit d'égalisadon (40).

19. Procédure selon la revendication 8, **caractérisé par le fait que** ladite phase d'ouvrir ladite valve d'alimentation inférieure dudit second réservoir intermédiaire (13) comprend la phase d'ouvrir ledit volet à tenue hermétique inférieure (13b) dudit second réservoir intermédiaire (13).

20. Procédure selon la revendication 8, **caractérisé par le fait que** ladite phase de fermer ladite valve d'alimentation inférieure ledit second réservoir intermédiaire (13) comprend la phase de fermer ledit volet à tenue hermétique inférieure (13b) dudit second réservoir intermédiaire (13) et ladite seconde valve d'égalisation (49) dudit second circuit d'égalisation (40).
